Europäisches Patentamt

European Patent Office

Office européen des brevets

(19)

(11) EP 0 694 566 A1

(12) EUROPEAN PATENT APPLICATION

(43) Date of publication:
31.01.1996 Bulletin 1996/05

(51) Int. Cl.⁶: C08F 220/44, D01F 6/40

(21) Application number: 95110915.6

(22) Date of filing: 12.07.1995

(84) Designated Contracting States:
AT BE CH DE DK ES FR GB GR IE LI LU MC NL PT SE

(30) Priority: 29.07.1994 IT MI941636

(71) Applicant: Montefibre S.p.A.
Milan (IT)

(72) Inventors:
• Mulleri, Cristiano
  Abbasanta (OR) (IT)
• Quarta, Antonio
  Sassari (IT)
• Tedesco, Raffaele
  Venezia, Mestre (IT)

(74) Representative: Gennari, Marco
I-20097 San Donato Milanese (MI) (IT)

(54) **Process for the production of modacrylic copolymers and acrylic copolymers thus obtained**

(57) Process for the production of modacrylic copolymers comprising acrylonitrile, a halogenated comonomer and a comonomer containing hydrophilic groups by the polymerization in continuous of monomers in an aqueous suspension and in the presence of a catalyst, wherein the polymerization is carried out in a tubular reactor equipped with an overflow and having a ratio length/diameter of more than 1.8; the catalyst, acrylonitrile and comonomer containing the hydrophilic groups are fed into the lower area of the reactor; the catalyst is of the type with a high decomposition rate such as to decompose for at least 70% by weight, under polymerization conditions, before reaching the feeding area of the halogenated comonomer.

EP 0 694 566 A1

## Description

The present invention relates to a process for the production of modacrylic copolymers.

More specifically, the present invention relates to a process for the production of modacrylic copolymers suitable to be transformed into fibres which, as well as being flame-resistant, have a high lustre, also after boiling, a good dyeability and excellent textile processability with all the traditional technologies for spinning and for the production of synthetic furs.

The term modacrylic copolymers, as used in the present invention and claims, refers to any copolymer of acrylonitrile containing not more than 85% by weight, for example from 50 to 85%, of acrylonitrile in the chain.

As is known, acrylonitrile polymers are used for the production of a wide variety of fibres, filaments, films and other shaped articles having an excellent combination of physico-mechanical properties, textile processability, dyeability and lustre which remains stable even after boiling.

In spite of these excellent properties, acrylonitrile polymers and the relative shaped bodies have the disadvantage of not being flame-resistant and consequently of not being able to be used in those fields in which this property is required.

Various attempts have been made to resolve this problem. Among these, the copolymerization of acrylonitrile with halogenated monomers, such as for example, vinyl chloride, vinylidene chloride, vinyl bromide etc., has led to the production of copolymers and relative fibres having improved flame-resistant properties. The halogenated comonomers, however, must be used in relatively high quantities (at least 15% by weight) to give the copolymer and relative fibres a certain degree of self-extinction. Such quantities of halogenated comonomers negatively influence the textile and "touch" characteristics of the relative fibres. In addition, the fibres obtained from these copolymers, commonly called modacrylic fibres, have the basic defect of being or becoming porous following treatment in a bath of boiling water, as in the dyeing phase for example. In addition, the dyeability and dyeing uniformity of these fibres are limited.

To overcome these drawbacks a proposal has been made to introduce into the polymeric chain monomers containing hydrophilic groups, such as acrylamides, vinyl acetate, methyl acrylate, alkyl-esters of vinyl-phosphoric acid, sulphonated vinylic monomers etc. The use of hydrophilic comonomers reduces the problem of porosity and dyeability but causes a considerable deterioration in the physico-mechanical properties of the fibres obtained, such as elastic modulus, yield point etc., especially after dry or humid heat treatment.

In addition, a homogeneous ternary copolymer with a random distribution of the acrylonitrile components, halogenated comonomer and comonomer containing hydrophilic groups does not permit the production of glossy fibres or fibres which conserve their lustre even after humid thermal treatment. In fact, during the humid spinning phase voids are formed inside the fibres which seem to be due to the hydrophobicity of the halogenated monomer, whereas the hydrophilic groups are shielded by the halogen radicals and are prevented from slowing down the coagulation phase which, as is known, avoids the formation of voids.

To overcome this drawback, Italian patent 1.068.681 proposes the introduction of the comonomer containing hydrophilic groups not through the contemporaneous copolymerization of the three monomers but by mixing two binary copolymers consisting respectively of an acrylonitrile-comonomer copolymer containing hydrophilic groups and an acrylonitrile-halogenated comonomer copolymer. According to this patent, preferred comonomers containing hydrophilic groups are acrylamidoalkansulphonic acids and the corresponding alkaline, earth-alkaline and ammonium salts.

This technology overcomes the problem of the dulling of the fibres even after boiling, but causes disadvantages deriving from the separate preparation of the two copolymers and the preparation and mixing of the relative solutions in the phase preceding the spinning, consequently creating problems of cost. In addition, the fibres obtained from this mixture of copolymers require high quantities of comonomer containing hydrophilic groups to conserve their brilliancy; this involves a high dyeing rate and consequently difficulties in obtaining a good dye homogeneity.

The Applicant has now found that the above disadvantages can be overcome by carrying out the copolymerization of the three monomers, acrylonitrile, halogenated comonomer and comonomer containing hydrophilic groups, under particular and well defined process conditions.

In particular, tests carried out by the Applicant have shown that modacrylic fibres, having a high flame-resistance, good physico-mechanical characteristics even after dry or humid heat treatment, a high lustre, even after boiling, a good dyeability and excellent textile processability, can be obtained by using a ternary modacrylic copolymer obtained by carrying out the copolymerization of the three comonomers in continuous and in an aqueous suspension, in the presence of a catalyst having an average life which is less than the reaction time and feeding the comonomer containing hydrophilic groups and the halogenated comonomer into separate reaction zones; the latter being preferably fed in the terminal phase of the polymerization.

The present invention therefore relates to a process for the production of modacrylic copolymers comprising acrylonitrile, a halogenated comonomer and a comonomer containing hydrophilic groups by the continuous polymerization of the monomers in an aqueous suspension and in the presence of a catalyst, wherein:

(a) the polymerization is carried out in a tubular reactor equipped with overflow and having a ratio length/diameter of more than 1.8, with radial stirring;

(b) the catalyst, acrylonitrile and comonomer containing the hydrophilic groups are fed in the lower zone of the reactor and the halogenated comonomer into the upper zone of the reactor; and

(c) the catalyst is of the type with a high decomposition rate which decomposes for at least 70% by weight, under polymerization conditions, before reaching the feeding zone of the halogenated comonomer.

The process of the present invention is facilitated both by the different solubilities in water of the acrylonitrile, comonomer containing hydrophilic groups and halogenated comonomer and by the decomposition rate of the catalyst and permits most of the comonomer containing hydrophilic groups to react prevalently with the acrylonitrile.

In this way a copolymer is formed having a structure of the A-S-A-C type, wherein "A" is a sequence of monomeric units of acrylonitrile, "S" is a sequence of comonomer units containing hydrophilic groups and "C" a sequence of halogenated comonomer units and wherein "S" is substantially bound to the acrylonitrile sequences. As a result the hydrophilic groups in this copolymer are not shielded or neutralized by the halogen radicals but are situated along the polymeric chain of the acrylonitrile and can exert their effect during the coagulation phase of the fibre obtained by humid spinning, thus avoiding the formation of voids.

The molecular weight of the copolymer thus obtained can vary within a wide range and is generally between 10,000 and 1,000,000.

In the copolymer the hydrophilic groups are present in a quantity of at least 60, preferably from 90 to 130, microequivalents per gram of copolymer.

Preferred copolymers are those containing from 20 to 45% by weight of halogenated comonomer, from 0.8 to 3% by weight of comonomer containing hydrophilic groups and the remaining complement to 100% by weight consists of acrylonitrile.

Any comonomer copolymerizable with acrylonitrile and containing hydrophilic groups, such as acid and/or sulphonic groups, can be used in the process of the present invention. Comonomers copolymerizable with acrylonitrile and containing sulphonic groups are preferred.

Allyl, methallyl, vinyl, styrene or acrylamido-alkane-sulphonic acids, and the relative alkaline and ammonium salts can be used in the process of the present invention. Examples of comonomers containing sulphonic groups comprise sodium salt of allyl- or methallyl-sulphonic acid (MASS or SAS), sodium salt of 2-acrylamido-2-propanesulphonic acid (SAMPS), sodium salt of 2-acrylamido-2-methylpropanesulphonic acid, sodium salt of 2-acryamido-2-phenylethanesulphonic acid, sodium salt of sulphophenylmethallyl ether acid (SPME).

The sodium salt of methallylsulphonic acid (MAS) and the sodium salt of 2-acrylamido-2-propanesulphonic acid (SAMPS) are preferred.

The halogenated comonomer can be selected from vinyl and vinylidene chloride and bromide, even if vinylidene chloride is preferred as it is less volatile and has reactivity ratios with acrylonitrile which give an almost azeotropic copolymerization i.e. wherein the composition of the copolymer, expressed in weight percentage, is practically the same as the composition of the mixture of monomers, also expressed in weight percentage.

The decomposition rate of the catalytic system must be in relation to the residence time of the monomers in the reactor so that the catalytic system almost completely decomposes in the zone of the reactor which is rich in acrylonitrile and comonomer containing hydrophilic groups so that this comonomer is prevalently bound to the acrylonitrile chain.

The catalytic system used in the process of the present invention is preferably of the Redox type with a high reactivity so as to decompose for at least 70% in the zone of the reactor which is rich in acrylonitrile and comonomer containing hydrophilic groups, under the polymerization conditions used.

A type of catalyst which meets these requisites is that having a decomposition rate $K_d$ higher than 0.5 h$^{-1}$, wherein $K_d$ is given by the expression

$$(C)/(C_o) = 1/(1 + K_d Q)$$

wherein (C) are the moles of catalyst discharged unaltered from the reactor; $(C_o)$ the moles of catalyst fed and Q the average residence time of the catalyst in the reactor.

A preferred Redox system is that consisting of an alkaline persulphate and an alkaline bisulphite in the presence of iron ions as promoters and at a pH of between 2.5 and 2.9, wherein the bisulphite is in excess in moles with respect to the persulphate.

Ratios in moles bisulphite/persulphate of between 1.1 and 10 can be used.

The concentration of the catalyst is the catalytic concentration and preferably between 0.1 and 1% by weight with respect to the total monomers.

To obtain the process conditions of the present invention tubular reactors are used with a ratio height/diameter of more than 1.8, preferably of at least 2 and up to 5, equipped with stirrers with two turbines of which one is situated at the bottom and the other half way up the reactor.

An aqueous solution of the catalyst, for example sodium persulphate, the comonomer containing hydrophilic groups and acrylonitrile is fed onto the bottom of the reactor. The other reagents comprising the water used as a reaction medium, vinylidene chloride, sodium bisulphite, iron sulphate and sulphuric acid to bring the solution to the desired pH value, are fed half way up the reactor, in correspondence with the second turbine. Any possible coagulating agents, such as sodium sulphate, can be added to the reaction medium together with the water.

A typical and illustrative composition of the mixture of monomers comprises: from 50 to 79% by weight of acrylonitrile, from 20 to 48% by weight of vinylidene chloride or vinyl bromide and from 1 to 5% by weight of a comonomer containing hydrophilic groups, the sum of the three components being equal to 100% by weight.

The polymerization is carried out with a ratio water/monomers of between 2.5 and 6.5, preferably between 3.5 and 5, at a temperature of between 35 and 50°C. The polymerization is carried out in continuous with the reactor operating completely full and with a continuous discharge by means of the overflow on the top of the reactor. The reaction time is more than 4 hours and between 5 and 15 hours, preferably between 7 and 10 to allow a total conversion of more than 80% and preferably more than 90% and a good incorporation yield of the comonomer containing hydrophilic groups in the final copolymer.

At the outlet of the reactor, the suspension of the copolymer is subjected to a stripping process under vacuum to remove the non-reacted monomers, it is subsequently filtered and the copolymer repeatedly washed with water to remove the catalytic residues.

The copolymer thus obtained is dried on a fluid bed or on a strip dryer with hot air at a temperature lower than 100°C.

For the production of fibres, the copolymers is dissolved in one of its solvents, such as dimethylformamide, dimethylacetamide, dimethylsulphoxide, etc., to obtain a dope spinning solution having a concentration of solids of between 20 and 35% by weight. The solution thus obtained is de-aerated and spun by extrusion with a die, having a hole diameter of between 40 and 250 micrometres, in a coagulation bath consisting of a mixture solvent/water in a weight ratio of between 60:40 and 30:70.

The fibres leaving the coagulation bath are stretched with a stretching ratio of at least 5, washed with water, lubricated and dried. The stretching is preferably carried out in two steps of which the first in a bath containing a mixture of spinning solvent and water in the proportion 15/85, at a temperature of between 85°C and the boiling point of the mixture, and the second step in water at a temperature higher than 95°C.

The washing is carried out in water, preferably countercurrent, at a temperature of between 50 and 80°C.

In the lubricating operation the fibres are treated with a mixture of antistatic and lubricating products, according to the techniques well known to experts in the field.

The drying is preferably carried out on rolls heated to a temperature of between 100 and 150°C.

After drying the fibres are crimped, collected in tow, aniled in an autoclave with vapour at a relative pressure of more than 1.2 Kg/cm$^2$ and then cut into staples or transformed into tops by picking.

The modacrylic fiber thus obtained has characteristics of reduced flammability, this expression meaning that the LOI value (Limiting Oxygen Index) is equal to at least 24. In addition this modacrylic fibre has excellent general characteristics and in particular excellent mechanical and dyeability characteristics and a high structural stability in heat treatments, for example with water at 100°C, or with vapour or the like. Under the microscope the fibre proves to be without voids even after treatment in water or with vapour at a temperature of 100°C.

A few illustrative examples are given below to provide a better understanding of the present invention and for its practical embodiment, without restricting the invention in any way.

In the examples, all the parts and percentages are given in weight unless otherwise specified.

## EXAMPLE 1

The polymerization was carried out in a tubular cylindrically-shaped, 60 litre reactor with the lower and upper parts of the ellipsoidal type, having a total height of 682 mm and a diameter of 350 mm, corresponding to a ratio height/diameter of 1.95.

The reactor was equipped with a stirrer having two turbines each with three curved blades, of which one turbine was situated at 40 mm from the bottom and the other at 320 mm from the bottom, and two blade breakwaters in line with one of the diameters of the reactor.

The reactor was also equipped with 4 plunged pipes all starting from the top of the reactor, of which three arrived near the lower turbine and the fourth near the upper turbine.

The catalyst (potassium persulphate) and the comonomer containing sulphonic groups, in an aqueous solution at 2.5 and 25% respectively, and the acrylonitrile were fed through the three pipes immersed up to the lower turbine. All the other reagents were fed through the fourth pipe immersed up to the upper turbine.

The products fed and the relative quantities, expressed in parts by weight, were:

| - Water | 450; |
|---|---|
| - Acrylonitrile | 58; |
| - Vinylidene chloride | 38.7; |
| - Sodium 2-acrylamido-2-propanesulphonate | 3.3; |
| - Potassium persulphate | 0.35; |
| - Sodium bisulphite | 0.35; |
| - Iron sulphate | $6.8 \times 10^{-4}$; |
| - Sodium sulphate | 1.2; |
| - Sulphuric acid | 0.2. |

The polymerization was carried out at a temperature of 44°C, at a pH of 2.7 and with a residence time of 550 min. with a continuous discharge by overflow from a pipe on top of the reactor at a height of 4 m. The reactor was stirred at 75 revs/min.

The polymeric suspension was discharged in continuous into a tank where the non-reacted vinylidene chloride was removed.

After the acrylonitrile had been removed by stripping under vacuum, the copolymer was separated by filtration and washed repeatedly.

The separated, dried copolymer had a specific viscosity of 0.190 and the following composition, expressed in weight percentage:

| - Acrylonitrile | 59.2; |
|---|---|
| - Vinylidene chloride: | 39.0; |
| - Sodium 2-acrylamido-2-propanesulphonate: | 1.8 |

A solution at 27% by weight of dimethylacetamide was prepared with the copolymer thus produced. The solution, after de-aeration and filtration, was fed at 60°C, with a gear pump, to a die with 40,000 holes, each having a diameter of 52 micrometres, immersed in a coagulation bath consisting of a mixture water/dimethylacetamide in the weight ratio 45/55, maintained at 35°C.

The fibres leaving the coagulation bath were collected on a first series of rolls at the rate of 9 m/min, they were then stretched first in a bath water/dimethylacetamide in the ratio 85/15 at 98°C for a stretching ratio of 2 and subsequently in water at 98°C for a stretching ratio of 3.

The stretched fibres were washed with water at 70°C and immersed in a solution containing lubricating, antistatic products, then dried on heated rolls at 145°C with impeded retroaction and finally collected at a rate of 54 m/min on perforated conveyor trucks.

The conveyor trucks were introduced into an autoclave and stabilized with saturated vapour at 1.4 Kg/cm$^2$ of relative pressure.

The fibres thus obtained had the following properties:

| | |
|---|---:|
| - Titre | 2.2 dtex |
| - Impact strength | 27.5 cN/tex |
| - Ultimate elongation | 37% |
| - Elastic modulus | 450 cN/tex |
| - Loop strength | 14 cN/tex |
| - Loop elongation | 17% |
| - LOI (ASTM D 2863) | 27% |
| - Number of macro voids on the fibre at the outlet of the coagulation bath: | less than 5/mm |
| - Number of macro voids on the final fibre: | 0 |
| - Section of the final fibre: | circular |

The final fibre was very glossy even after boiling for 2 hours in water and drying at 50°C for 2 hours.

EXAMPLE 2 (comparative)

The operating conditions of example 1 were repeated using a reactor having the same shape and dimensions as that of example 1 but equipped with a third turbine situated at 130 mm from the top and two plunged pipes immersed up to the lower turbine (40 mm from the bottom) and arranged at 180° from each other.

The potassium persulphate was fed through one of these pipes and all the other reagents, in the same quantities, proportions and flow rates as example 1, through the second of the plunged pipes.

The polymerization was carried out under the same conditions of temperature, residence time and pH as example 1; whereas the rotation rate of the stirrer was 250 revs/min to guarantee a good homogeneity of the reaction medium.

The copolymer obtained had the following composition, expressed in weight percentage:

| | |
|---|---:|
| - Acrylonitrile: | 60.1; |
| - Vinylidene chloride: | 38.0; |
| - Sodium 2-acrylamido-2-propanesulphonate: | 1.8. |

The copolymer was spun under the same conditions as example 1 and the fibre obtained had a high number of voids which could not be counted, at the outlet of the coagulation bath.

Owing to the excessive porosity of the fibre, the complete removal of the water (drying) was made possible only by increasing the temperature of the rolls from 140°C to 160°C.

The fibre looked opaque even before stabilization in the autoclave and maintained its opacity also after this treatment.

The fibre dyed with Malachite Green at 90°C and dried at 60°C, with the same amount of dye, had a dye yield of less than 40% by weight with respect to the fibre of example 1.

**Claims**

1. A process for the production of modacrylic copolymers comprising acrylonitrile, a halogenated comonomer and a comonomer containing hydrophilic groups by the polymerization in continuous of the monomers in an aqueous suspension and in the presence of a catalyst, characterized in that:

   (a) the polymerization is carried out in a tubular reactor equipped with overflow and having a ratio length/diameter of more than 1.8, with radial stirring;
   (b) the catalyst, acrylonitrile and comonomer containing the hydrophilic groups are fed into the lower zone of the reactor and the halogenated comonomer into the upper zone of the reactor; and

(c) the catalyst is of the type with a high decomposition rate which decomposes for at least 70% by weight, under polymerization conditions, before reaching the feeding zone of the halogenated comonomer.

2. The process according to claim 1, wherein the comonomer containing hydrophilic groups is selected from allyl-, methallyl, vinyl, styrene or acrylamido-alkane-sulphonic acids, and the relative alkaline and ammonium salts

3. The process according to claims 1 or 2, wherein the halogenated comonomer is selected from vinyl and vinylidene chloride and bromide.

4. The process according to any of the previous claims, wherein the catalyst has a decomposition rate $K_d$, given by the expression

$$(C)/(C_o) = 1/(1 + K_d Q)$$

wherein (C) are the moles of catalyst discharged unaltered from the reactor; ($C_o$) the moles of catalyst fed and Q the average residence time of the catalyst in the reactor, higher than 0.5 h$^{-1}$.

5. The process according to any of the previous claims, wherein the catalytic system is of the Redox type.

6. The process according to claim 5, wherein the Redox system consists of an alkaline persulphate and an alkaline bisulphite in the presence of iron ions as promoters and at a pH of between 2.5 and 2.9, wherein the ratio in moles bisulphite/persulphate is between 1.1 and 10.

7. The process according to any of the previous claims, wherein the tubular reactor has a ratio height/diameter of at least 2 and up to 5, and is equipped with stirrers with two turbines of which one is situated on the bottom and the other half way up the reactor.

8. The process according to any of the previous claims, wherein the mixture of momoners comprises from 50 to 79% by weight of acrylonitrile, from 20 to 48% by weight of vinylidene chloride or vinyl bromide and from 1 to 5% by weight of a comonomer containing hydrophilic groups, the sum of the three components being equal to 100% by weight.

9. The process according to any of the previous claims, wherein the polymerization is carried out at a temperature of between 35 and 50°C, in continuous with the reactor operating completely full and with a continuous discharge by overflow on the top of the reactor, and with a reaction time of between 5 and 15 hours, preferably between 7 and 10.

10. A modacrylic copolymer of the type A-S-A-C, wherein "A" is a sequence of monomeric units of acrylonitrile, "S" is a sequence of comonomer units containing hydrophilic groups and "C" a sequence of halogenated comonomer units and wherein "S" is substantially bound to the acrylonitrile sequences.

11. The modacrylic copolymer of claim 10, having a molecular weight of between 10,000 and 1,000,000.

12. The modacrylic copolymer according to claims 10 or 11, wherein the hydrophilic groups are present in a quantity of at least 60, preferably from 90 to 130, microequivalents per gram of copolymer.

13. The modacrylic copolymer according to any of the previous claims from 10 to 12, containing from 20 to 45% by weight of halogenated comonomer, from 0.8 to 3% by weight of comonomer containing hydrophilic groups and the complement to 100% by weight of acrylonitrile.

14. Modacrylic fibres obtained by the humid spinning of the copolymer according to any of the previous claims from 10 to 13, having a LOI value (Limiting Oxygen Index) equal to at least 24, excellent mechanical and dyeability characteristics, a high structural stability in heat treatment with water or vapour at 100°C and without voids even after treatment in water or with vapour at a temperature of 100°C.

European Patent Office

**EUROPEAN SEARCH REPORT**

Application Number

EP 95 11 0915

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | FR-A-2 370 113 (SNIA VISCOSA SOC. NAZIONALE IND. APPLICAZIONE VISCOSA S.P.A.)<br>----- | | C08F220/44<br>D01F6/40 |
| | | | |
| | | | **TECHNICAL FIELDS SEARCHED** (Int.Cl.6) |
| | | | C08F |

The present search report has been drawn up for all claims

| Place of search | Date of completion of the search | Examiner |
|---|---|---|
| THE HAGUE | 20 September 1995 | Cauwenberg, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)